(19) Europäisches Patentamt
European Patent Office
Office européen des brevets

(11) **EP 3 410 329 B1**

(12) **EUROPÄISCHE PATENTSCHRIFT**

(45) Veröffentlichungstag und Bekanntmachung des Hinweises auf die Patenterteilung:
**06.04.2022  Patentblatt 2022/14**

(21) Anmeldenummer: **17173704.2**

(22) Anmeldetag: **31.05.2017**

(51) Internationale Patentklassifikation (IPC):
**_G06F 21/31_** _(2013.01)_

(52) Gemeinsame Patentklassifikation (CPC):
**G06F 21/316;** G06F 2221/2133

(54) **VERFAHREN UND SYSTEM ZUR ERKENNUNG UNREGELMÄSSIGER EINGABEN FÜR DATENVERARBEITUNGSANWENDUNGEN**

METHOD AND SYSTEM FOR DETECTING IRREGULAR INPUTS FOR DATA PROCESSING APPLICATIONS

PROCÉDÉ ET SYSTÈME DE DÉTECTION DES ENTRÉES IRRÉGULIÈRES POUR DES APPLICATIONS DE TRAITEMENT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.12.2018  Patentblatt 2018/49**

(73) Patentinhaber: **Deutsche Telekom AG**
**53113 Bonn (DE)**

(72) Erfinder: **SCHMUHL, Oliver**
**10318 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
**WO-A1-2010/105249      WO-A1-2014/205148**
**US-A1- 2014 325 682**

## Beschreibung

Die Erfindung betrifft das Gebiet der Datenverarbeitung, insbesondere ein Verfahren und System zur Erkennung unregelmäßiger Eingaben für Datenverarbeitungsanwendungen.

Anwendungsbeispiele für ein erfindungsgemäßes System und Verfahren umfassen Anwendungen mit Anwenderinteraktion, beispielsweise im Internet zugängliche Inhalte und Dienste, bei denen eine softwarebasierte Abgrenzung und Unterscheidung zu automatisierten linearen Eingaben erforderlich ist. Mit anderen Worten, das erfindungsgemäße System und Verfahren kann als ein Completely Automated Public Turing test to tell Computers and Humans Apart (CAPTCHA) eingesetzt werden.

WO 2010/105249 A1 betrifft ein System und Verfahren zur Unterscheidung von menschlichen Eingabeereignissen von durch Malware erzeugten Ereignissen, wobei ein erster Satz von Eingabeereignissen von einem Benutzer erzeugt wird, der das Eingabegerät verwendet. Die ersten Eingabeereignisse werden verwendet, um ein Merkmal zu erhalten oder abzuleiten, das den Benutzer identifiziert.

Um die Sicherheit vor unerwünschten automatisierten Zugriffen zu erhöhen, werden immer zuverlässigere und komplexere CAPTCHA-Systeme verwendet. Oft wird dabei auf die Verwendung von menschlichen Sinnen gesetzt, beispielsweise wird häufig auf die Lösung eines visuell dargestellten Problems abgestellt, das in der Regel durch einen Computer nicht erfasst werden kann. Alternativ werden Sound- oder Videosequenzen verwendet.

Jedoch ergeben sich bei Verwendung komplexer CAPTCHA-Aufgaben, insbesondere für Personen mit eingeschränkten körperlichen Fähigkeiten, Probleme. So können visuelle CAPTCHA von Sehbehinderten nicht gelöst werden, akustische CAPTCHA können von Hörbehinderten nicht gelöst werden, und auch anderweitig eingeschränkte Personen können CAPTCHA oft nicht in adäquater Weise lösen.

Es ist daher eine Aufgabe der vorliegenden Erfindung ein Verfahren und System zur Erkennung unregelmäßiger Eingaben für Datenverarbeitungsanwendungen zur Verfügung zu stellen. Diese Aufgabe wird mit dem erfindungsgemäßen Gegenstand der unabhängigen Patentansprüche gelöst. Die abhängigen Patentansprüche beziehen sich auf weitere Aspekte der Erfindung.

Es ist ein Grundgedanke der Erfindung eine Eingangssignalfolge zu erfassen und auftretende zeitliche Unregelmäßigkeiten in der Signalfolge bei der Nutzung von physischen oder virtuellen Eingabegeräten zu ermitteln und zu bewerten. Als CAPTCHA kann eine so erstellte Bewertung genutzt werden, weil diese eine Abgrenzung und Unterscheidung zu automatisierten linearen, d.h. regelmäßigen, Eingaben erlaubt.

Mit anderen Worten, in dem Verfahren wird fortlaufend der Zeitpunkt von Beginn, Halten und Ende der verschiedenen Eingangssignale von Eingabegeräten, vorzugsweise in Millisekunden oder kleineren Zeiteinheiten, gemessen. Auf den ermittelten Messwerten basierend, werden die Dauer der einzelnen Eingangssignale und die Pausen zwischen den Eingangssignalen berechnet.

Daraus entstehen zwei Mengen von Daten; eine Menge für die Einzelwerte mit der Dauer von einzelnen Signalen und eine Menge für die Einzelwerte mit der Dauer der Pause zwischen einzelnen Signalen. In diesen Mengen werden Unregelmäßigkeiten, d.h. Unterschiede in der Zeitdauer gesucht und daraus ein numerischer Indikatorwert, beispielsweise basierend auf der Anzahl der Unregelmäßigkeiten, und/oder ein Muster/Fingerabdruck der Mengen erstellt. Der Indikatorwert kann zur Abgrenzung und Unterscheidung manueller Eingaben zu automatisierten linearen Einzeleingaben, d.h. dem Eingabeverhalten der einzelnen Signale, verwendet werden. Der Fingerabdruck wird zur Abgrenzung und Unterscheidung zu automatisierten linearen Gesamteingaben, d.h. einem gesamten Eingabeverhalten aller Signale, verwendet und/oder einem Sammeln und Vergleichen von mindestens zwei erfassten Eingabefolgen.

Die Erfindung wird nachstehend anhand von Beispielen und der Zeichnungen näher erläutert.

## Kurze Beschreibung der Figurens

Es zeigt:

Figur 1 ein Blockdiagramm einer erfindungsgemäßen Ausführungsform des Verfahrens;

Figur 2 eine Illustration einer Eingabesignalfolge einer Tastatur eines Rechners;

Figuren 3a bis 3c eine Darstellung eines Versuchsergebnisses mit manueller Eingabe für eine Ausführungsform der Erfindung;

Figur 4 eine Darstellung eines Versuchsergebnisses mit Eingabe durch DOM-Manipulation einer Ausführungsform der Erfindung;

Figur 5 eine Darstellung eines Versuchsergebnisses mit Eingabe einer Tastatursimulation in einer ersten Variante für eine Ausführungsform der Erfindung; und

Figuren 6a bis 6c eine Darstellung eines Versuchsergebnisses mit Eingabe einer Tastatursimulation in einer zweiten Variante einer Ausführungsform der Erfindung.

**Detaillierte Beschreibung der Figuren und der Erfindung**

In einer Ausführungsform der Erfindung wird, bei der Datenmessung, der Zeitpunkt, vorzugsweise in Millisekunden oder kleiner, vom Eintreffen, Anhalten und Beenden der verschiedenen Eingabesignale von Eingabegeräten, vorzugsweise einer Tastatur, gemessen. Bei einer physischen oder virtuellen Tastatur wird der Zeitpunkt vom Auftreten der Signale: Key-Down, d.h. dem Drücken einer Taste, und Key-Up, d.h. dem Loslassen einer Taste gemessen. Weitere Ausführungsformen können andere Eingabegeräte betreffen. Andere Eingabegeräte sind vorzugsweise ein Touch-Screen, ein Maus, oder eine Spracheingabe. Insbesondere kann aber auch das Signal spezieller Eingabegeräte für Körperbehinderte erfasst werden.

In einer Ausführungsform der Erfindung wird, bei der Datenerhebung, aus der Datenmessung die Dauer zwischen den Signalen: Key-Down und Key-Up ermittelt. Dieser Wert liefert die Dauer einer Eingabe, in der o.g. Ausführungsform die Dauer eines Tastenanschlags. Als zweiter Wert wird die Dauer zwischen Key-Up und Key-Down ermittelt. Dieser Wert liefert die Pause zwischen zwei Eingaben, d.h. zwei Tastenanschlägen.

In einer Ausführungsform der Erfindung erfolgt eine Speicherung der ermittelten Daten im Speicher des DV-Systems fortlaufend im kompletten und/oder begrenzten Umfang in Wertetabellen, die die einfachste Ausführungsform der erfindungsgemäßen Vektoren darstellen. Es gibt eine Wertetabelle, tbS , für die Dauer der Eingaben und eine Wertetabelle, tbP, für die Pausen zwischen den Eingaben. Als Schlüssel werden für beide Wertetabellen alle Varianten der möglichen Dauer in der verwendeten zeitlichen Skalierung benutzt.

Tabelle 1: Wertetabelle für die Messung im Bereich 0 - 255 ms (Skalierung Millisekunden)

| Schlüssel: ms | 0 | ... | 100 | 101 | 102 | 103 | 104 | 105 | 106 | 107 | ... | 255 |
|---|---|---|---|---|---|---|---|---|---|---|---|---|
| Wert: Ja / Nein | | | | | | | | | | | | |

Als Wert wird die ermittelte Dauer verwendet. In diesem Fall aber nicht als Wert, sondern als Aussage, welche der möglichen Varianten eine ermittelte Dauer erfüllt.

Tabelle 2: Wertetabelle für eine Messung der Wertefolge: 101ms, 105ms, 107ms, 100ms, 107ms, 105ms , ...

| Schlüssel: ms | 0 | ... | 100 | 101 | 102 | 103 | 104 | 105 | 106 | 107 | ... | 255 |
|---|---|---|---|---|---|---|---|---|---|---|---|---|
| Wert: Ja / Nein | | | X | X | | | | X | | x | | |

Tabelle 3: Wertetabelle für eine Messung der Wertefolge: 101ms, 101ms, 101ms, 101ms, 101ms, ...

| Schlüssel: ms | 0 | ... | 100 | 101 | 102 | 103 | 104 | 105 | 106 | 107 | ... | 255 |
|---|---|---|---|---|---|---|---|---|---|---|---|---|
| Wert: Ja / Nein | | | | X | | | | | | | | |

In einer Ausführungsform der Erfindung wird eine Anzahl der Unregelmäßigkeiten über die direkte Anzahl der erfüllten Varianten in den Wertetabellen tbS und tbP ermittelt.

In einer Ausführungsform der Erfindung ist die Bewertung anhand mathematischer und/oder statistischer Methoden individuell lösbar. Allgemeine Aussagen werden über das Verhältnis von Anzahl der Eingabesignale zur Anzahl der erkannten Unregelmäßigkeiten oder über das Verhältnis der Anzahl erkannter zu der der maximal möglichen Unregelmäßigkeiten getroffen.

In einem Pseudocode dargestellt, ergibt sich in einer Ausführungsform der Erfindung das Verhältnis der Anzahl der Eingabesignale zur Anzahl der erkannten Unregelmäßigkeiten aus:

tS: Vektor tS (Signale)
tP: Vektor tP (Pausen)
aSP: erfasste Gesamtanzahl der relevanten Signale und Pausen
iV: Indikatorwert

```
iV = RUNDEN((ZÄHLENWENNS(tS; WAHR)

    + ZÄHLENWENNS(tP; WAHR)) *100 /LÄNGE(aSP); 0)
```

In einem Pseudocode dargestellt, ergibt sich in einer Ausführungsform der Erfindung das Verhältnis der Anzahl der erkannten zu der der maximal möglichen Unregelmäßigkeiten aus:

tS: Vektor tS (Signale)
tP: Vektor tP (Pausen)
iV: Indikatorwert

$$iV = \text{RUNDEN}((\text{ZÄHLENWENNS}(tS; \text{WAHR})$$
$$+ \text{ZÄHLENWENNS}(tP; \text{WAHR})) *100 /(\text{LÄNGE}(tS)$$
$$+\text{LÄNGE}(tP)); 0)$$

In einer Ausführungsform der Erfindung werden aus den beschriebenen Wertetabellen tbS und tbP die Bitfelder bmS und bmP erzeugt. Diese beiden Bitfelder werden auch als Muster bezeichnet.

Tabelle 4: Eine Wertetabelle und das daraus resultierendes Bitfeld: 0...11000101...0

| Schlüssel: ms | 0 | ... | 100 | 101 | 102 | 103 | 104 | 105 | 106 | 107 | ... | 255 |
|---|---|---|---|---|---|---|---|---|---|---|---|---|
| Wert: Ja / Nein | | | X | X | | | | X | | X | | |

Die Bitfelder bmS und bmP werden zu einem gemeinsamen Bitfeld bmX verbunden. Dabei werden die Daten binär in vollem Umfang oder durch Unschärfe in verkürzter Form verwendet und bilden so den Fingerabdruck vom gesamten Eingabeverhalten.

In einem Pseudocode dargestellt, ergibt sich in einer Ausführungsform der Erfindung das Bitfeld bmX im vollen Umfang aus:

$$bmX = bmS + bmP$$

$$11001001 = 1100 + 1001$$

Das Bitfeld bmX wird auch als Fingerabdruck bezeichnet. Die erstellten Fingerabdrücke werden im DV-System gespeichert und dienen einem binären und/oder unscharfen Vergleich. Tritt ein Fingerabdruck mehrfach auf, ist dies auch bei ausreichender Anzahl von Unregelmäßigkeiten in der Eingabesignalfolge ein Hinweis auf eine automatisierte lineare Eingabe.

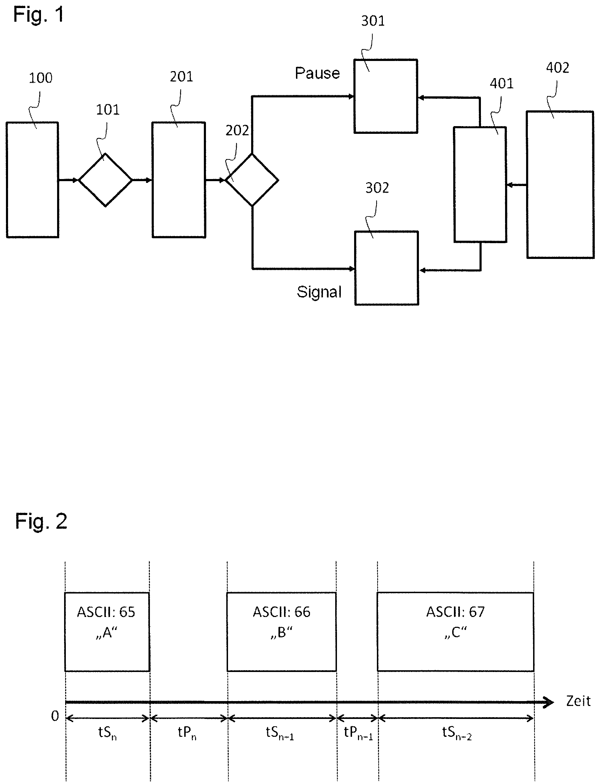

Figur 1 zeigt ein Blockdiagram einer Ausführungsform des erfindungsgemäßen Verfahrens und Figur 2 eine Illustration einer zeitlichen Eingabefolge erzeugt durch eine Tastatur eines Rechners. Die Eingabefolge aus Figur 2 ergibt sich durch Drücken der Tasten A, B, und C auf der Tastatur. Unterhalb der Zeitachse sind die Intervalle für die Zeitdauern $tS_n$, $tS_{n+1}$ und $tS_{n+2}$ sowie $tP_n$ und $tP_{n+1}$ gezeigt, die jeweils unterschiedlich lang sind, mit anderen Worten unregelmäßig sind.

Wie in Figur 1 dargestellt, wird zunächst eine Eingabefolge 100 empfangen. Eine erste optionale Filtereinrichtung 101 überprüft ob die Eingabefolge für das Verfahren relevant ist. Diese Filtereinheit erhöht die Qualität der Erfassung. In einer Zeitmessungseinrichtung 201 werden die Zeitdauern $tS_n$ und $tP_n$ ermittelt. In einer zweiten Filtereinrichtung 202 werden die Zeitdauern einem Vektor 301 für die Pausendauern $tP_n$ und einem Vektor 302 für die Signaldauern $tS_n$ zugeordnet.

Eine Auswertungseinrichtung 401 ermittelt dann anschließend die Unregelmäßigkeiten und bestimmt den Indikatorwert und/oder den Fingerabdruck. Eine externe Anwendung 402, vorzugsweise ein Webservice und/oder Webanwendung, kann auf den von der Auswertungseinrichtung 401 bereit-gestellten Indikatorwert und/oder Fingerabdruck zugreifen. So ist die Verwendung als CAPTCHA möglich, denn eine menschliche Eingabe wird immer eine bestimmte Eingabecharakteristik aufweisen, die sich anhand der bestimmten Unregelmäßigkeiten ermitteln und bewerten lässt.

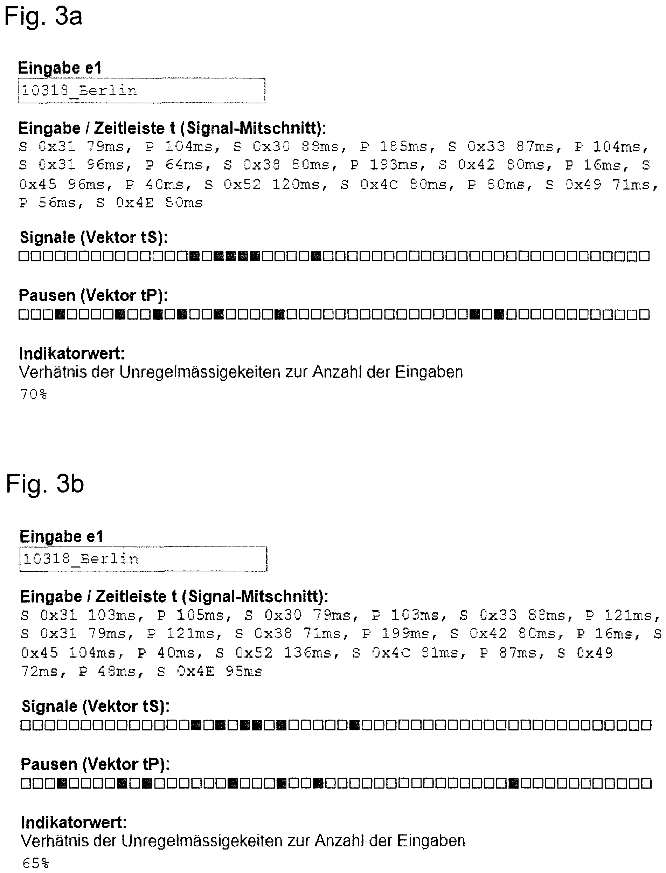

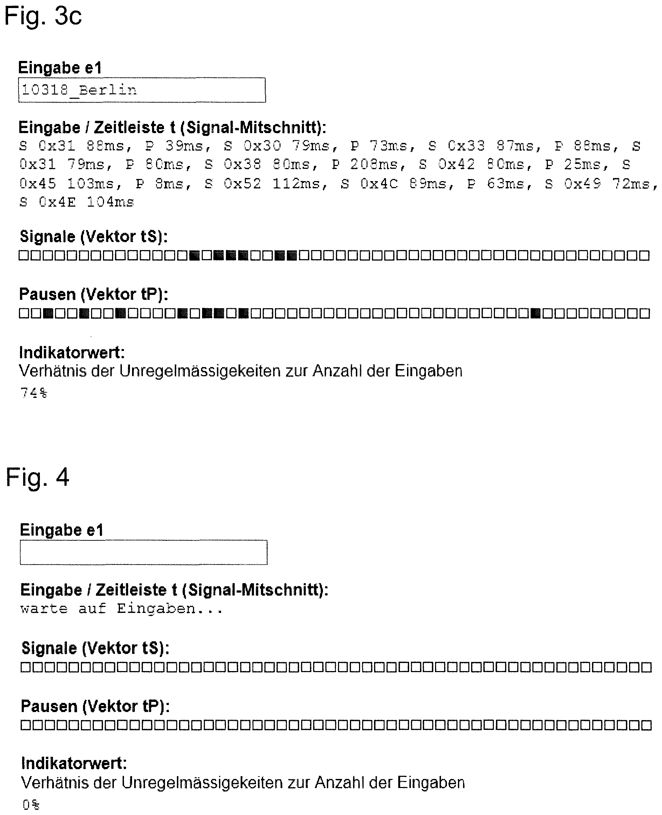

Figuren 3a bis 3c zeigen eine Darstellung eines Versuchsergebnisses mit manueller Eingabe für eine Ausführungsform der Erfindung. Bei dem Versuch wird die Eingabe "10318_Berlin" über eine an einen Rechner angeschlossene Tastatur getätigt. Auf dem Rechner arbeitet ein Programmcode, der das erfindungsgemäße Verfahren und System umsetzt. In den Figuren sind die erfassten Eingaben, d.h. die gemessenen Zeitdauern, die bestimmten Vektoren tbS und tbP und der bestimmte Indikatorwert gezeigt. Da bei den wiederholten Eingaben in Fig. 3a bis 3c die manuelle Eingabe leicht variiert, ergeben sich jeweils andere Vektoren und ein Indikatorwert zwischen 50 und 75%.

Figur 4 zeigt eine Darstellung eines Versuchsergebnisses mit Eingabe durch DOM-Manipulation für eine Ausführungsform der Erfindung. Die Ausführungsform entspricht der Ausführungsform in den Figuren 3a bis 3c. Durch eine Document Object Model (DOM) Manipulation wird eine Eingabe im Eingabefeld durchgeführt. Der Versuch zeigt, dass gar keine Eingaben über die Tastatur registriert werden, die Vektoren bleiben also leer. Der Indikatorwert ist folglich 0%. Ein solcher Angriff kann also im Vergleich mit der manuellen Eingabe erfolgreich erkannt werden.

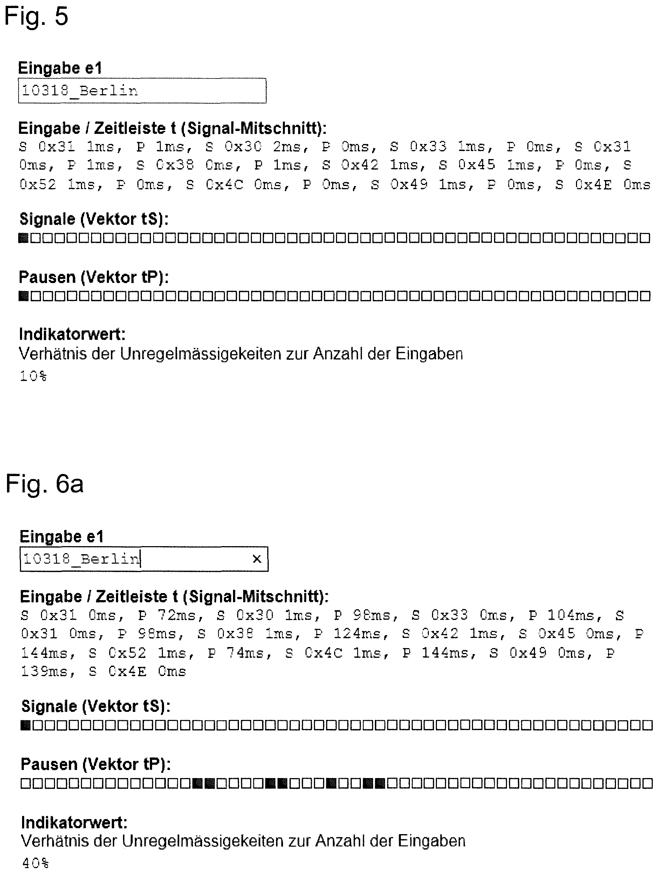

Figur 5 zeigt eine Darstellung eines Versuchsergebnisses mit Eingabe einer Tastatursimulation in einer ersten Variante einer Ausführungsform der Erfindung. Die Ausführungsform entspricht der Ausführungsform in den Figuren 3a bis 3c. Insbesondere Softwarelösungen zur Automatisierung, welche die Client-API von Browsern nutzen, um Benutzer-Interaktionen zu simulieren, greifen dieses Verfahren der Manipulation auf. Die Tastatursimulation in der ersten Variante sendet dabei eine Eingabe, beispielsweise über eine AutoHotKey-Funktion, d.h. eine emulierte Eingabe. Aufgrund der Emulation wird jeweils nur ein Element der jeweiligen Vektoren besetzt und es ergeben sich konstante Indikatorwerte von 10%. Ein solcher Angriff kann also im Vergleich mit der manuellen Eingabe ebenfalls erfolgreich erkannt werden.

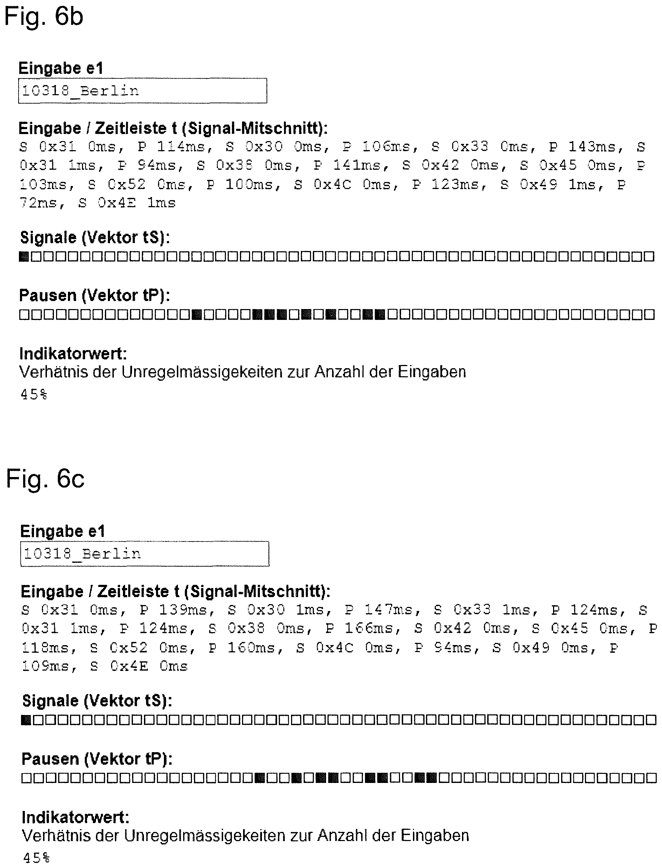

Figuren 6a bis 6c eine Darstellung eines Versuchsergebnisses mit Eingabe eine Tastatursimulation in einer zweiten Variante für eine Ausführungsform der Erfindung. Die Ausführungsform entspricht der Ausführungsform in den Figuren 3a bis 3c. Die Tastatursimulation in der ersten Variante sendet dabei eine Eingabe, beispielsweise über eine AutoHotKey Funktion, eine emulierte Eingabe. Bei der Emulation werden zwischen den Eingabesignalen zufällige Pausen eingefügt. Aufgrund der Emulation wird jeweils nur ein Element der jeweiligen Vektoren tbS besetzt. Allerdings ergibt sich eine Verteilung bei der Besetzung des Vektors tbP. Die Indikatorwerte variieren bei 40%. Ein solcher Angriff kann also im Vergleich mit der manuellen Eingabe ebenfalls erfolgreich erkannt werden.

Eine weitere Optimierung der Emulation, kann eine mit der manuellen Eingabe nahezu identische Eingabe ermöglichen. Jedoch ist die Auswertung zum Zweck der einfachen Darstellung in dem Versuch auf eine sehr einfache Ausführungsform der Erfindung reduziert. Diese Reduzierung stellt keine Einschränkung des Schutzumfangs dar. Eine komplexere Analyse des Vektors berücksichtigt die Besetzungsverteilung der Vektoren und/oder deren Korrelation.

Obwohl die Erfindung mittels der Figuren und der zugehörigen Beschreibung dargestellt und detailliert beschrieben ist, ist diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen vom Erfindungsgegenstand, beziehungsweise von den offenbarten Gegenständen, ausgeschlossen sein. Die Offenbarung umfasst Ausführungsfonnen, die ausschließlich die in den Ansprüchen beziehungsweise in den Ausführungsbeispielen beschriebenen Merkmale umfassten sowie auch solche, die zusätzliche andere Merkmale umfassen.

**Patentansprüche**

1.  Verfahren zur Erkennung unregelmäßiger Eingaben für Datenverarbeitungsanwendungen, wobei das Verfahren die folgenden Schritte aufweist:

    a) Erfassen einer Eingangssignalfolge (100) in eine Datenverarbeitungsanwendung von mindestens einer physischen und/oder virtuellen Eingabeeinheit und Ermitteln von mindestens zwei Zeitdauern tS für eine Dauer der Erfassung eines Eingabesignals und mindestens zwei Zeitdauern tP für die Dauer bis zur Erfassung eines nächsten Eingabesignals,
    b) Bilden eines ersten Vektors (302) mit oder basierend auf den ermittelten Zeitdauern tS und Bilden eines zweiten Vektors (301) mit oder basierend auf den ermittelten Zeitdauern tP,

       wobei eine Länge des ersten und des zweiten Vektors vorbestimmt ist und die Elemente des ersten und des zweiten Vektors aufeinanderfolgenden vorbestimmten Zeitintervallen bis zu einer maximalen Erfassungsdauer tMax entsprechen;
       wobei die Werte der Elemente des ersten und des zweiten Vektors boolesche Eigenschaften haben;
       wobei ein Fingerabdruck (401) der Eingabe bestimmt wird, durch ein Umwandeln des ersten und des zweiten Vektors in jeweils ein Bitfeld, und ein Verbinden der Bitfelder des ersten und des zweiten Vektors in vollen Umfang oder durch Unschärfe in verkürzter Form zu einem gemeinsamen Bitfeld; und
       wobei das Verfahren weiter die folgenden Schritte aufweist:

c) Ermittlung von Unregelmäßigkeiten in der Eingangssignalfolge durch Analyse des Fingerabdrucks, und

d) Bereitstellen eines Indikatorwerts basierend auf den ermittelten Unregelmäßigkeiten.

2. Verfahren nach Anspruch 1,
wobei in Schritt a) die Zeitdauer tS aus der gemessenen Zeitdauer zwischen einem Key-Down-Signal und einem darauffolgenden Key-Up-Signal bestimmt wird und die Zeitdauer tP aus der gemessenen Zeitdauer zwischen einem Key-Up-Signal und einem darauffolgenden Key-Down-Signal bestimmt wird.

3. Verfahren nach einem der Ansprüche 1 oder 2,
wobei in Schritt c) die Analyse basiert auf mindestens einer Analyse der folgenden:

i) der Besetzungsdichte in mindestens einem von dem ersten oder dem zweiten Vektor,
ii) der Werteverteilung in mindestens einem von dem ersten oder dem zweiten Vektor,
iii) einer Korrelation zwischen dem ersten und dem zweiten Vektor,
iv) einer Korrelation zwischen in mindestens einem von dem ersten oder dem zweiten Vektor mit einem vorbestimmten Vektor.

4. Verfahren nach einem der Ansprüche 1 bis 3,
wobei der Indikatorwert auf dem Verhältnis der Summe der besetzten Vektorelemente des ersten und/oder des zweiten Vektor zu einer Anzahl der erfassten Eingaben basiert.

5. System zur Erkennung unregelmäßiger Eingaben für Datenverarbeitungsanwendungen, wobei das System aufweist:

eine Signalerfassungseinheit, die konfiguriert ist, eine Eingangssignalfolge mindestens einer physischen und/oder virtuellen Eingabeeinheit zu erfassen und konfiguriert ist, mindestens zwei Zeitdauern tS für eine Dauer der Erfassung eines Eingangssignals und mindestens zwei Zeitdauern tP für die Dauer bis zur Erfassung eines nächsten Eingangssignals zu ermitteln;
eine Signalverarbeitungseinheit, die konfiguriert ist, einen ersten Vektor basierend auf den ermittelten Zeitdauern tS und einen zweiten Vektor basierend auf den ermittelten Zeitdauern tP zu bilden;
wobei eine Länge des ersten und des zweiten Vektors vorbestimmt ist und die Elemente des ersten und des zweiten Vektors aufeinanderfolgenden vorbestimmten Zeitintervallen bis zu einer maximalen Erfassungsdauer tMax entsprechen;
wobei die Werte der Elemente des ersten und des zweiten Vektors boolesche Eigenschaften haben;
wobei ein Fingerabdruck der Eingabe bestimmt wird, durch ein Umwandeln des ersten und des zweiten Vektors in jeweils ein Bitfeld, und ein Verbinden der Bitfelder des ersten und des zweiten Vektors in vollen Umfang oder durch Unschärfe in verkürzter Form zu einem gemeinsamen Bitfeld; und
das System ferner aufweist:

eine Analyseeinheit, die konfiguriert ist, Unregelmäßigkeiten in dem Eingangssignal durch Analyse des Fingerabdrucks zu ermitteln; und
eine Indikationseinheit, die konfiguriert ist, einen Indikatorwert basierend auf den ermittelten Unregelmäßigkeiten bereitzustellen.

**Claims**

1. A method for detecting irregular inputs for data processing applications, wherein the method comprises the followings steps:

a) capturing an input signal sequence (100) in a data processing application from at least one physical and/or virtual input unit and determining at least two time durations tS for a duration of capturing an input signal and at least two time durations tP for the duration until the capturing of a next input signal,
b) forming a first vector (302) with or based on the determined time durations tS and forming a second vector (301) with or based on the determined time durations tP, wherein a length of the first and the second vector is predetermined and the elements of the first and the second vector correspond to consecutive predetermined time intervals until a maximum capturing duration tMax;

wherein the values of the elements of the first and the second vector have Boolean characteristics;

wherein a fingerprint (401) of the input is determined by converting the first and the second vector in one bit field each and by connecting the bit fields of the first and the second vector in full extent or by blurring in shortened form into a common bit field; and

wherein the method further comprises the following steps:

    c) determining irregularities in the input signal sequence by analyzing the fingerprint, and
    d) providing an indicator value based on the determined irregularities.

2. The method according to claim 1,
wherein in step a) the time duration tS is determined from the measured time duration between a key-down signal and a subsequent key-up signal, and the time duration tP is determined from the measured time duration between a key-up signal and a subsequent key-down signal.

3. The method according to any of claims 1 or 2,
wherein in step c) the analysis is based on at least one analysis of the following ones:

    i) the occupation density in at least one of the first or the second vector,
    ii) the value distribution in at least one of the first or the second vector,
    iii) a correlation between the first and the second vector,
    iv) a correlation between at least one of the first or the second vector with a predetermined vector.

4. The method according to any one of claims 1 to 3,
wherein the indicator value is based on the ratio of the sum of the occupied vector elements of the first and/or the second vector to a number of the captured inputs.

5. A system for detecting irregular inputs for data processing applications, wherein the system comprises:

    a signal capturing unit configured to capture an input signal sequence of at least one physical and/or virtual input unit and configured to determine at least two time durations tS for a duration of capturing an input signal and at least two time durations tP for the duration until the capturing of a next input signal;
    a signal processing unit configured to form a first vector based on the determined time durations tS and a second vector based on the determined time durations tP;
    wherein a length of the first and the second vector is predetermined and the elements of the first and the second vector correspond to consecutive predetermined time intervals until a maximum capturing duration tMax;
    wherein the values of the elements of the first and the second vector have Boolean characteristics;
    wherein a fingerprint of the input is determined by converting the first and the second vector in one bit field each and by connecting the bit fields of the first and the second vector in full extent or by blurring in shortened form into a common bit field; and wherein the system further comprises:

    an analysis unit configured to determine irregularities in the input signal by analyzing the fingerprint; and
    an indicator unit configured to provide an indicator value based on the determined irregularities.

**Revendications**

1. Procédé de détection d'entrées irrégulières pour des applications de traitement de données, ledit procédé comprenant les étapes suivantes :

    a) détection d'une séquence de signaux d'entrée (100) dans une application de traitement de données provenant d'au moins une unité d'entrée physique et/ou virtuelle et détermination d'au moins deux temps de durée tS pour une durée de détection d'un signal d'entrée et d'au moins deux temps de durée tP pour une durée jusqu'à la détection d'un signal d'entrée suivant,
    b) formation d'un premier vecteur (302) avec, ou sur la base du temps de durée tS déterminé, et formation d'un deuxième vecteur (301) avec, ou sur la base du temps de durée tP déterminé,

        où une longueur du premier et du deuxième vecteurs est prédéterminée et les éléments du premier et du deuxième vecteurs correspondent à des intervalles temporels prédéterminés consécutifs jusqu'à une durée de détection tMax maximale ;
où les valeurs des éléments du premier et du deuxième vecteurs présentent des propriétés booléennes ;
où une empreinte digitale (401) de l'entrée est déterminée, par conversion du premier et du deuxième vecteurs en un champ de bits chacun, et couplage en un champ de bits commun des champs de bits du premier et du deuxième vecteurs dans leur totalité ou par flou sous forme raccourcie ; et
ledit procédé comprenant en outre les étapes suivantes :

c) détermination d'irrégularités dans la séquence de signaux d'entrée par analyse de l'empreinte digitale, et
d) préparation d'une valeur d'indication sur la base des irrégularités déterminées.

2. Procédé selon la revendication 1,
où, lors de l'étape a), le temps de durée tS est déterminé à partir du temps de durée mesuré entre un signal de touche enfoncée et un signal de touche relevée consécutif, et le temps de durée tP est déterminé à partir du temps de durée mesuré entre un signal de touche relevée et un signal de touche enfoncée consécutif.

3. Procédé selon la revendication 1 ou la revendication 2,
où, lors de l'étape c) l'analyse est basée sur au moins une analyse de ce qui suit :

i) la densité d'occupation dans le premier et/ou le deuxième vecteur,
ii) la distribution de valeurs dans le premier et/ou le deuxième vecteur,
iii) une corrélation entre le premier et le deuxième vecteurs,
iv) une corrélation entre le premier et/ou le deuxième vecteur et un vecteur prédéterminé.

4. Procédé selon l'une des revendications 1 à 3,
où la valeur d'indication est basée sur le rapport entre la somme des éléments de vecteur occupés du premier et/ou du deuxième vecteur et un nombre d'entrées détectées.

5. Système pour la détection d'entrées irrégulières pour des applications de traitement de données, ledit système comprenant :

une unité de détection de signaux, configurée pour détecter une séquence de signaux d'entrée d'au moins une unité d'entrée physique et/ou virtuelle, et configurée pour déterminer au moins deux temps de durée tS pour une durée de détection d'un signal d'entrée et au moins deux temps de durée tP pour une durée jusqu'à la détection d'un signal d'entrée suivant ;
une unité de traitement de signaux, configurée pour former un premier vecteur sur la base du temps de durée tS déterminé et un deuxième vecteur sur la base du temps de durée tP déterminé ;
où une longueur du premier et du deuxième vecteurs est prédéterminée et les éléments du premier et du deuxième vecteurs correspondent à des intervalles temporels prédéterminés consécutifs jusqu'à une durée de détection tMax maximale ;
où les valeurs des éléments du premier et du deuxième vecteurs présentent des propriétés booléennes ;
où une empreinte digitale de l'entrée est déterminée, par conversion du premier et du deuxième vecteurs en un champ de bits chacun, et couplage en un champ de bits commun des champs de bits du premier et du deuxième vecteurs dans leur totalité ou par flou sous forme raccourcie ; et
ledit système comprenant en outre :

une unité d'analyse, configurée pour déterminer des irrégularités dans le signal d'entrée par analyse de l'empreinte digitale ; et
une unité d'indication, configurée pour préparer une valeur d'indication sur la base des irrégularités déterminées.

## Fig. 1

100    101    201    202    Pause    301    401    402

Signal    302

## Fig. 2

| ASCII: 65 „A" | | ASCII: 66 „B" | | ASCII: 67 „C" |

Zeit

0    $tS_n$    $tP_n$    $tS_{n-1}$    $tP_{n-1}$    $tS_{n-2}$

# Fig. 3a

**Eingabe e1**

| 10318_Berlin |

**Eingabe / Zeitleiste t (Signal-Mitschnitt):**

S 0x31 79ms, P 104ms, S 0x30 88ms, P 185ms, S 0x33 87ms, P 104ms,
S 0x31 96ms, P 64ms, S 0x38 80ms, P 193ms, S 0x42 80ms, P 16ms, S
0x45 96ms, P 40ms, S 0x52 120ms, S 0x4C 80ms, P 80ms, S 0x49 71ms,
P 56ms, S 0x4E 80ms

**Signale (Vektor tS):**

□□□□□□□□□□□□□□□■□■■■■□□□□■□□□□□□□□□□□□□□□□□□□□□□□□□□

**Pausen (Vektor tP):**

□□□■□□□□■□□■□■□□■□□□□■□□□□□□□□□□□□□□□□□■□■□□□□□□□□□□

**Indikatorwert:**
Verhätnis der Unregelmässigekeiten zur Anzahl der Eingaben
70%

# Fig. 3b

**Eingabe e1**

| 10318_Berlin |

**Eingabe / Zeitleiste t (Signal-Mitschnitt):**

S 0x31 103ms, P 105ms, S 0x30 79ms, P 103ms, S 0x33 88ms, P 121ms,
S 0x31 79ms, P 121ms, S 0x38 71ms, P 199ms, S 0x42 80ms, P 16ms, S
0x45 104ms, P 40ms, S 0x52 136ms, S 0x4C 81ms, P 87ms, S 0x49
72ms, P 48ms, S 0x4E 95ms

**Signale (Vektor tS):**

□□□□□□□□□□□□□□■□■□■■□■□□□□□■□□□□□□□□□□□□□□□□□□□□□□□□

**Pausen (Vektor tP):**

□□□■□□□□□■□■□□□□□□■□□□■□□■□□■□□□□□□□□□□□□□□■□□□□□□□□□

**Indikatorwert:**
Verhätnis der Unregelmässigekeiten zur Anzahl der Eingaben
65%

# Fig. 3c

**Eingabe e1**

| 10318_Berlin |

**Eingabe / Zeitleiste t (Signal-Mitschnitt):**

S 0x31 88ms, P 39ms, S 0x30 79ms, P 73ms, S 0x33 87ms, P 88ms, S
0x31 79ms, P 80ms, S 0x38 80ms, P 208ms, S 0x42 80ms, P 25ms, S
0x45 103ms, P 8ms, S 0x52 112ms, S 0x4C 89ms, P 63ms, S 0x49 72ms,
S 0x4E 104ms

**Signale (Vektor tS):**

□□□□□□□□□□□□□□■□■■■□□■■□□□□□□□□□□□□□□□□□□□□□□□□□□□□

**Pausen (Vektor tP):**

□□■□□■□□■□□□□■□■■□■□□□□□□□□□□□□□□□□□□□□□□□■□□□□□□□□

**Indikatorwert:**
Verhätnis der Unregelmässigkeiten zur Anzahl der Eingaben
74%

# Fig. 4

**Eingabe e1**

| |

**Eingabe / Zeitleiste t (Signal-Mitschnitt):**
warte auf Eingaben...

**Signale (Vektor tS):**
□□□□□□□□□□□□□□□□□□□□□□□□□□□□□□□□□□□□□□□□□□□□□□□□□□□□

**Pausen (Vektor tP):**
□□□□□□□□□□□□□□□□□□□□□□□□□□□□□□□□□□□□□□□□□□□□□□□□□□□□

**Indikatorwert:**
Verhätnis der Unregelmässigkeiten zur Anzahl der Eingaben
0%

# Fig. 5

**Eingabe e1**

| 10318_Berlin |
|---|

**Eingabe / Zeitleiste t (Signal-Mitschnitt):**

S 0x31 1ms, P 1ms, S 0x30 2ms, P 0ms, S 0x33 1ms, P 0ms, S 0x31
0ms, P 1ms, S 0x38 0ms, P 1ms, S 0x42 1ms, S 0x45 1ms, P 0ms, S
0x52 1ms, P 0ms, S 0x4C 0ms, P 0ms, S 0x49 1ms, P 0ms, S 0x4E 0ms

**Signale (Vektor tS):**

■□□□□□□□□□□□□□□□□□□□□□□□□□□□□□□□□□□□□□□□□□□□□□□□□□□□□□□□□□

**Pausen (Vektor tP):**

■□□□□□□□□□□□□□□□□□□□□□□□□□□□□□□□□□□□□□□□□□□□□□□□□□□□□□□□□□

**Indikatorwert:**
Verhätnis der Unregelmässigekeiten zur Anzahl der Eingaben
10%


# Fig. 6a

**Eingabe e1**

| 10318_Berlin| | × |
|---|---|

**Eingabe / Zeitleiste t (Signal-Mitschnitt):**

S 0x31 0ms, P 72ms, S 0x30 1ms, P 98ms, S 0x33 0ms, P 104ms, S
0x31 0ms, P 98ms, S 0x38 1ms, P 124ms, S 0x42 1ms, S 0x45 0ms, P
144ms, S 0x52 1ms, P 74ms, S 0x4C 1ms, P 144ms, S 0x49 0ms, P
139ms, S 0x4E 0ms

**Signale (Vektor tS):**

■□□□□□□□□□□□□□□□□□□□□□□□□□□□□□□□□□□□□□□□□□□□□□□□□□□□□□□□□

**Pausen (Vektor tP):**

□□□□□□□□□□□□□□□□□■■□□□□□■■□□□■□□■■□□□□□□□□□□□□□□□□□□□□□□□□

**Indikatorwert:**
Verhätnis der Unregelmässigekeiten zur Anzahl der Eingaben
40%

# Fig. 6b

**Eingabe e1**

```
10318_Berlin
```

**Eingabe / Zeitleiste t (Signal-Mitschnitt):**

S 0x31 0ms, P 114ms, S 0x30 0ms, P 106ms, S 0x33 0ms, P 143ms, S 0x31 1ms, P 94ms, S 0x38 0ms, P 141ms, S 0x42 0ms, S 0x45 0ms, P 103ms, S 0x52 0ms, P 100ms, S 0x4C 0ms, P 123ms, S 0x49 1ms, P 72ms, S 0x4E 1ms

**Signale (Vektor tS):**

■□□□□□□□□□□□□□□□□□□□□□□□□□□□□□□□□□□□□□□□□□□□□□□□□□□□□□

**Pausen (Vektor tP):**

□□□□□□□□□□□□□□■□□□□□■■■□■□■□■□□■■□□□□□□□□□□□□□□□□□□□□□

**Indikatorwert:**

Verhätnis der Unregelmässigekeiten zur Anzahl der Eingaben

45%

# Fig. 6c

**Eingabe e1**

```
10318_Berlin
```

**Eingabe / Zeitleiste t (Signal-Mitschnitt):**

S 0x31 0ms, P 139ms, S 0x30 1ms, P 147ms, S 0x33 1ms, P 124ms, S 0x31 1ms, P 124ms, S 0x38 0ms, P 166ms, S 0x42 0ms, S 0x45 0ms, P 118ms, S 0x52 0ms, P 160ms, S 0x4C 0ms, P 94ms, S 0x49 0ms, P 109ms, S 0x4E 0ms

**Signale (Vektor tS):**

■□□□□□□□□□□□□□□□□□□□□□□□□□□□□□□□□□□□□□□□□□□□□□□□□□□□□□

**Pausen (Vektor tP):**

□□□□□□□□□□□□□□□□□□□■□□□■□■■□■□□■■□□■■□□□□□□□□□□□□□□□□□

**Indikatorwert:**

Verhätnis der Unregelmässigekeiten zur Anzahl der Eingaben

45%

**IN DER BESCHREIBUNG AUFGEFÜHRTE DOKUMENTE**

**In der Beschreibung aufgeführte Patentdokumente**

- WO 2010105249 A1